# EUROPÄISCHE PATENTSCHRIFT

(11) **EP 3 360 237 B1**
(45) Veröffentlichungstag und Bekanntmachung des Hinweises auf die Patenterteilung: **05.05.2021**
(21) Anmeldenummer: 16781726.1
(22) Anmeldetag: 10.10.2016
(51) Int. Cl.: H02K 11/33, H02K 55/00, H02K 55/02

(54) **ELEKTRISCHE MASCHINE**
ELECTRICAL MACHINE
MACHINE ELECTRIQUE

(30) Priorität: 09.10.2015 DE 102015117296
(43) Veröffentlichungstag der Anmeldung: 15.08.2018
(73) Patentinhaber: Oswald Elektromotoren Gmbh, 63897 Miltenberg (DE)
(72) Erfinder: KOWALSKI, Thomas, 63776 Mömbris (DE); REIS, Thomas, 63924 Kleinheubach (DE); TEIGELKÖTTER, Johannes, 63741 Aschaffenburg (DE); OSWALD, Johannes, 63897 Miltenberg (DE); STOCK, Alexander, 63739 Aschaffenburg (DE)
(74) Vertreter: Habermann Intellectual Property Partnerschaft von Patentanwälten mbB
(86) Internationale Anmeldenummer: PCT/EP2016/074132
(87) Internationale Veröffentlichungsnummer: WO 2017/060509

(56) Entgegenhaltungen:
- WO-A1-2007/036430
- DE-A1- 10 120 414
- DE-A1- 10 156 212
- DE-A1-102011 056 008
- JP-A- 2005 224 022
- US-A1- 2004 119 427

## Beschreibung

Die Erfindung betrifft eine elektrische Maschine mit einem Stator, mit einem Rotor und mit mehreren Maschinenspulen, wobei die elektrische Maschine eine Kühleinrichtung aufweist, die dazu geeignet ist, ein supraleitendes Material mindestens bis unter eine Sprungtemperatur abzukühlen, wobei eine Wicklung mindestens einer Maschinenspule aus dem supraleitenden Material besteht, wobei die Wicklung mit der Kühleinrichtung in Wirkverbindung steht, um die Wicklung bis unter die Sprungtemperatur abzukühlen, wobei die Wicklungen von einem thermischen Isolator umgeben sind und wobei die elektrische Maschine eine elektrisch leitend mit der Wicklung verbundene steuerbare oder regelbare Versorgungseinrichtung zur elektrischen Versorgung und Ansteuerung der Maschinenspule aufweist, wobei eine steuerbare oder regelbare Leistungsendstufe der Versorgungseinrichtung innerhalb des thermischen Isolators angeordnet ist und elektrisch leitend mit der Wicklung der mindestens einen Maschinenspule verbunden ist.

Solche elektrischen Maschinen, bei denen der Rotor relativ zu einem feststehenden Stator eine Drehbewegung ausführt, werden in unterschiedlichsten Ausführungsformen in einer Vielzahl von Anwendungsgebieten sowohl als Motoren als auch als Generatoren eingesetzt. Beispielsweise können die elektrischen Maschinen mit Drehstrom betrieben und als Asynchron- oder Synchronmaschine ausgeführt sein.

In Abhängigkeit von der vorgesehenen Leistung der elektrischen Maschine kann die elektrische Maschine notwendigerweise ein erhebliches Gewicht und Volumen aufweisen, wodurch die Herstellung und Montage der elektrischen Maschine erschwert wird. Einschränkungen im Bauraum oder Begrenzungen im Gewicht können dann dazu führen, dass die herkömmliche elektrische Maschine als Antrieb ungeeignet ist.

Für einige Anwendungen werden zudem elektrische Maschinen mit sehr kurzen Anregelzeiten bzw. einem schnellen, dynamischen Betriebsverhalten benötigt. Beispielsweise werden solche elektrischen Maschinen als Belastungseinrichtungen für hochdynamische Motorenprüfstände eingesetzt. Herkömmliche elektrische Maschinen können die steigenden Anforderungen in diesem Bereich häufig nicht oder nur unzureichend erfüllen.

Daher wurden elektrische Maschinen entwickelt, die Maschinenspulen aus supraleitenden Materialien aufweisen. Supraleitende Materialien sind Materialien, deren elektrischer Widerstand bei Unterschreiten einer materialspezifischen Sprungtemperatur sprunghaft auf Null abfällt. Werden die bis unter die Sprungtemperatur abgekühlten Wicklungen der Maschinenspulen beispielsweise mit einem Wechselstrom beaufschlagt, tritt nur ein geringer Energieverlust ein, der gegenüber einem Ohm'schen Widerstand nur sehr gering ist. Dadurch können auch mit vergleichsweise kleinen Maschinen starke elektromagnetische Felder erzeugt werden, wodurch die Leistungsdichte der elektrischen Maschinen erheblich steigt und eine hohe Dynamik ermöglicht wird.

Die elektrische Maschine mit einer supraleitenden Wicklung kann beispielsweise mit einem dreiphasigen Wechselstrom betrieben werden. Es ist aber auch möglich, die elektrische Maschine mit einem höherphasigen Wechselstrom zu betreiben. Die elektrische Maschine kann dabei sowohl in einem niedrigeren Drehzahlbereich und gleichzeitig hohem Drehmoment als auch in einem sogenannten Feldschwächungsbereich bis zu hohen Geschwindigkeiten bei einer konstanten Leistung betrieben werden.

Als supraleitendes Material kommen beispielsweise Hochtemperatursupraleiter in Frage, deren Sprungtemperatur bereits bei einer Temperatur von minus 140 Grad Celsius erreicht sein kann. Für die Wicklung der Maschinenspulen können supraleitende Materialien beispielsweise in Band- oder Drahtform eingesetzt werden. Als supraleitende Materialien kommen unter anderem die Zusammensetzungen YBCO (YBCO coated conductor), BSCCO, MgB₂ oder Pnictide in Frage, die bei ausreichend tiefen Temperaturen eine außerordentlich hohe Stromdichte aufweisen können.

Die Maschinenspulen können sowohl am oder im Rotor als auch am oder im Stator angeordnet sein. Der Stator kann außerhalb (als Außenläufer) oder innerhalb des Rotors (als Innenläufer) angeordnet sein.

Solche elektrische Maschinen mit supraleitenden Wicklungen werden in der auf die Anmelderin zurückgehenden

Druckschrift DE 10 2011 056 008 A1 beschrieben. Vergleichbare elektrische Maschinen mit einer alternativ ausgestalteten Kühlung der supraleitenden Wicklungen werden in der zum Zeitpunkt der Anmeldung noch ausstehenden Veröffentlichung der Internationalen Patentanmeldung PCT/EP2015/073069 beschrieben, die die Priorität der deutschen Patentanmeldung DE 10 2014 114 451.1 beansprucht.

Bei den bekannten elektrischen Maschinen mit supraleitenden Wicklungen werden die Wicklungen üblicherweise durch Badkryostaten, bei denen die zu kühlenden Maschinenspulen von einer Kryoflüssigkeit, beispielsweise von flüssigem Stickstoff, umgeben sind, oder durch einen Refrigeratorkryostaten, bei dem die Kühlung durch einen sogenannten Cryo-Cooler erfolgt, gekühlt.

Bei der steuerbaren oder regelbaren Versorgungseinrichtung handelt es sich üblicherweise um einen geeigneten Frequenzumrichter. Dabei werden häufig Frequenzumrichter mit einem über einen Gleichrichter gespeisten Gleichspannungszwischenkreis verwendet, über den ein entsprechend steuer- oder regelbarer Wechselrichter versorgt wird. Der Wechselrichter stellt mit Hilfe leistungselektronischer Schaltelemente - zum Beispiel in MOSFET-, IGBT- oder IGCT-Technik - die für den Betrieb der elektrischen Maschine erforderliche Leistung bei vorzugebener Frequenz der Betriebsspannungen zur Verfügung.

Die Wechselrichter werden daher häufig auch als Leistungsendstufe bezeichnet. Der Gleichspannungszwischenkreis und die Leistungsendstufe können beispielsweise über elektrische Kabelleitungen miteinander verbunden werden.

Zur Steuerung bzw. Regelung der elektrischen Maschine bzw. der Leistungsendstufe weisen die elektrischen Maschinen entsprechende Regeleinrichtungen auf, die beispielsweise durch Erfassung eines zum Betrieb der Maschinenspule verwendeten Laststroms oder einer Maschinendrehzahl und geeigneter Sollwerte die jeweils gewünschte Ausgangsleistung der elektrischen Maschine zur Verfügung stellen. Entsprechende Verfahren zur Steuerung und Regelung elektrischer Maschinen werden beispielsweise in den auf die Anmelderin zurückgehenden Druckschriften WO 2012/127011 A2 und WO 2013/102597 A2 beschrieben.

In den Druckschriften WO 2007/036430 A1 und DE 101 56 212 A1 werden jeweils elektrische Maschinen mit supraleitenden Wicklungen beschrieben, bei denen steuerbare oder regelbare Leistungsendstufen innerhalb des Kryobereichs von Kryostaten angeordnet sind. Hierbei werden die Leistungsendstufen ebenso wie die innerhalb des Kryostaten angeordneten Wicklungen von einer Kryo-Kühleinrichtung bis zur Sprungtemperatur des supraleitenden Materials, aus dem die Wicklungen bestehen, abgekühlt.

In der Druckschrift JP 2005-224022 A wird eine elektrische Maschine mit supraleitenden Wicklungen beschrieben. Die supraleitenden Wicklungen sind in einem Kühlraum angeordnet und werden durch ein Kühlmedium gekühlt. Leistungsendstufen der elektrischen Maschine sind außerhalb des Kühlraums angeordnet und sind mit einem Kühlmediumrückfluss verbunden, über den durch den Kühlraum geleitetes Kühlmedium geführt und zur Kühlung der Leistungsendstufen verwendet wird.

Als Aufgabe der Erfindung wird es angesehen, die Versorgung der Maschinenspulen mit elektrischer Energie über die Versorgungseinrichtung zu verbessern.

Diese Aufgabe wird erfindungsgemäß durch die Merkmale des Anspruchs 1 gelöst.

Erfindungsgemäß ist vorteilhafterweise vorgesehen, dass Wicklungen mindestens zweier Maschinenspulen aus dem supraleitenden Material bestehen und verschiedenen Wicklungsgruppen zugeordnet sind, wobei mindestens zwei Wicklungsgruppen jeweils mit einer separaten, steuerbaren oder regelbaren Leistungsendstufe der Versorgungseinrichtung elektrisch leitend verbunden sind. Als Wicklungsgruppe werden eine oder mehrere Wicklungen verstanden, die von einer gemeinsamen Leistungsendstufe mit Energie versorgt werden.

Durch einen solchen modularen Aufbau der

Versorgungseinrichtung, bei dem mehrere Leistungsendstufen und vorteilhafterweise für jede Wicklung eine separate Leistungsendstufe verwendet werden, ist es möglich, die Leistungsendstufen besonders nah an den Maschinenspulen bzw. Wicklungen anzuordnen und eine erforderliche Leitungslänge zwischen den Leistungsendstufen und den jeweiligen Wicklungen zu reduzieren. Auf diese Weise ist eine genauere und schnellere Detektion des jeweiligen Laststroms zum Betrieb der einzelnen Maschinenspulen möglich. Dadurch wird auch ein schnellerer und präziserer Vergleich von Soll- und Iststrom möglich, auf Grundlage dessen eine Überwachung der Maschinenspulen erfolgen kann. Beispielsweise kann eine negative Abweichung des Ist-Laststroms vom Soll-Laststrom als sogenannter Quench des supraleitenden Materials der Wicklung interpretiert werden und die entsprechende Maschinenspule zum Schutz abgeschaltet oder mit reduziertem Laststrom weiterbetrieben werden. Eine positive Abweichung kann erfindungsgemäß als Kurzschluss der überwachten Wicklung interpretiert werden. Diese Fehler können bei der aus dem Stand der Technik bekannten deutlich beabstandeten Anordnung der Leistungsendstufen aufgrund des fehlenden ohmschen Anteils üblicherweise nicht erkannt werden. Durch den modularen Aufbau und die dadurch ermöglichte nahe Anordnung der Leistungsendstufen an den Maschinenspulen ist daher ein wirksamer Schutz für das supraleitende Maschinenspulensystem möglich. Zudem kann hierdurch ein geregelter Betrieb der Maschinenspulen innerhalb zulässiger Spulenparameter ermöglicht werden.

Durch den modularen Aufbau kann zudem eine höhere Ausfallsicherheit der elektrischen Maschine erreicht werden, da auch bei Ausfall oder Störung einzelner oder auch mehrerer Maschinenspulen ein Betrieb der elektrischen Maschine möglich bleibt. Dadurch kann die elektrische Maschine insbesondere auch dort zur Anwendung kommen, wo besondere Anforderungen an die Sicherheit gestellt werden. Daher ist die erfindungsgemäß elektrische Maschine auch vor allem als elektrischer Vortriebsmotor eines Hybridflugzeugs oder elektrischen Flugzeugs geeignet.

Vorteilhafterweise ist erfindungsgemäß vorgesehen, dass sämtliche Maschinenspulen bzw. Wicklungen jeweils mit einer separaten Leistungsendstufe elektrisch leitend verbunden sind und mit elektrischer Energie versorgt werden. Auf diese Weise kann unter anderem eine besonders hohe Ausfallsicherheit erreicht werden.

Der erfindungsgemäße modulare Aufbau der elektrischen Maschine wird vorteilhafterweise für feststehende Maschinenspulen des Stators der elektrischen Maschine verwendet. Auch die übrigen im Folgenden beschriebenen Ausführungsformen der elektrischen Maschine können vorteilhafterweise bei solchen elektrischen Maschinen verwendet werden, bei denen die Maschinenspulen und die Leistungsendstufen einen Teil des Stators bilden. Bei diesen elektrischen Maschinen wird der rotierende Teil bzw. der Rotor der elektrischen Maschine typischerweise mit Supraleitern, Normalleitern oder Permanentmagneten ausgeführt. Der stehende Teil bzw. Stator der elektrischen Maschine besteht erfindungsgemäß aus Maschinenspulen, von denen zumindest einige Wicklungen aus dem supraleitenden Material aufweisen sowie den zugehörigen Leistungsendstufen, die im Wirkverbund mit jeweils mindestens einer Maschinenspule bzw. Wicklung oder Wicklungsgruppe stehen.

Die Maschinenspulen oder zumindest die Wicklungen werden vorteilhafterweise innerhalb eines thermischen Isolators angeordnet, um die zur Kühlung benötigte Kühlleistung verringern zu können. Indem auch die Leistungsendstufe innerhalb des thermischen Isolators angeordnet wird, kann der Abstand zu den Wicklungen verringert werden, wodurch einige der bereits beschriebenen Vorteile erreicht werden können.

Um die Vorteile des modularen Aufbaus mit den Vorteilen der Anordnung der Leistungsendstufe in dem thermischen Isolator zu verbinden, ist erfindungsgemäß vorgesehen, dass die separaten, steuerbaren oder regelbaren Leistungsendstufen innerhalb des durch den thermischen Isolator gebildeten thermischen Isolationsbereichs der elektrischen Maschine angeordnet sind.

Durch die Anordnung der Leistungsendstufe bzw. der Leistungsendstufen ist auch eine effizientere Kühlung der Leistungsendstufen auf eine Betriebstemperatur möglich, die zwischen Raum- und kryogener Temperatur eingestellt werden kann. Durch die auf diese Weise erreichte effiziente Kühlung auf vergleichsweise niedrige Betriebstemperaturen realisierbar können die in den Leistungsendstufen auftretenden Wärmeverluste effizient abgeführt werden wodurch ein kompakterer und leichterer Gesamtaufbau der elektrischen Maschine ermöglicht wird. Dies wiederum ist die Grundlage zur Erzielung einer hohen Leistungsdichte der elektrischen Maschine, die bei vielen Anwendungen zweckmäßig ist, manche Applikationen der elektrischen Maschine wie beispielsweise bei elektrisch angetriebenen Fluggeräten aber auch erst ermöglicht.

Zur Steuerung bzw. Regelung der elektrischen Maschine und zur Ansteuerung der Wicklungen ist erfindungsgemäß vorgesehen, dass eine oder mehrere Steuerungseinrichtung zur Steuerung oder Regelung der Leistungsendstufe bzw. der Leistungsendstufen innerhalb des thermischen Isolationsbereichs angeordnet ist bzw. sind. Vorteilhafterweise weist jede Leistungsendstufe eine separate Steuerungseinrichtung auf. Mit Hilfe der Steuerungseinrichtungen wird vorteilhafterweise auch die Überwachung der Betriebsparameter der Wicklungen durchgeführt. Die Steuerung bzw. Regelung der Leistungsendstufen kann durch eine oder mehrere Steuerungseinrichtungen erfolgen. Bei Verwendung mehrerer Steuerungseinrichtungen kann ein Abgleich und eine Synchronisation der einzelnen Steuerungseinrichtungen dezentral durch die jeweiligen Steuerungseinrichtungen selbst oder auch zentral durch eine Mastersteuereinrichtung erfolgen. Die mehreren Steuerungseinrichtungen sind vorteilhafterweise über ein Bus-System miteinander verbunden.

Dadurch, dass die Steuerungseinrichtung bzw. die Steuerungseinrichtungen ebenfalls innerhalb des thermischen Isolationsbereichs angeordnet werden, ist auch eine besonders schnelle Überwachung der Betriebsparameter und Steuerung bzw. Regelung der Maschinenspulen möglich, da besonders kurze datenleitende und/oder elektrisch leitende Verbindungen verwendet werden können, die eine schnelle Auswertung und Ansteuerung erlauben.

Vorteilhafterweise ist erfindungsgemäß vorgesehen, dass durch die Steuerungseinrichtungen die einzelnen Leistungsendstufen so angesteuert werden können, das sämtliche Maschinenspulen oder lediglich einzelne Maschinenspulen zum Betrieb der elektrischen Maschine verwendet werden. Auf diese Weise kann eine Ausgangsleistung der elektrischen Maschine an eine benötigte Leistung angepasst werden.

Zur Kühlung von innerhalb des thermischen Isolators bzw. innerhalb des thermischen Isolationsbereichs angeordneten Maschinenspulen oder Wicklungen der Maschinenspulen ist erfindungsgemäß vorgesehen, dass die mindestens eine Maschinenspule oder zumindest die Wicklung der mindestens einen Maschinenspule über mindestens ein an der Wicklung anliegendes kältemittelführendes Kühlrohr gekühlt ist. Bei der erfindungsgemäßen Verwendung von Kühlrohren zur Kühlung der Wicklungen und der damit verbundenen direkten Anbindung des jeweiligen Kühlrohrs an die jeweilige Wicklung wird die Kühlleistung insbesondere durch Wärmeleitung über die Wandungen der Kühlrohre auf die die Kühlrohre vorteilhafterweise durchströmende Kryoflüssigkeit übertragen.

Es ist aber auch möglich und erfindungsgemäß vorgesehen dass die mindestens eine Maschinenspule oder zumindest die Wicklung der mindestens einen Maschinenspule innerhalb eines Kälteraums angeordnet ist, wobei der thermische Isolator den Kälteraum umgibt. Vorteilhafterweise ist vorgesehen, dass die Wicklung innerhalb eines Kälteraums eines Wicklungskryostaten angeordnet ist. Der Wicklungskryostat weist einen thermischen Isolator auf, der den Kälteraum umgibt. Bei dem thermischen Isolator handelt es sich erfindungsgemäß um ein technisches Vakuum. Innerhalb des technischen Vakuums ist die Leistungsendstufe zur elektrischen Versorgung der Wicklung angeordnet. Der Kälteraum ist vorteilhafterweise von einer Kryoflüssigkeit durchströmt, sodass es sich bei dem Wicklungskryostaten handelt es sich um eine Ausführungsvariante eines Badkryostaten handelt.

Vorteilhafterweise ist erfindungsgemäß vorgesehen, dass die mindestens eine Maschinenspule oder zumindest die Wicklung der mindestens einen Maschinenspule durch mindestens einen Badkryostaten oder durch mindestens einen Refrigeratorkryostaten gekühlt sind, wobei die mindestens eine Maschinenspule oder zumindest die Wicklung der mindestens einen Maschinenspule innerhalb des Kälteraums des Badkryostaten oder des Refrigeratorkryostaten angeordnet ist. Um eine unnötige Erwärmung der Kryoflüssigkeit vor der Kühlung der Wicklungen durch die Leistungselektronik zu vermeiden, ist vorteilhafterweise vorgesehen, dass die Leistungselektronik außerhalb des Kälteraums angeordnet ist. Bei der Verwendung eines Kälteraums sollte die Leistungsendstufe vorteilhafterweise auch deshalb außerhalb des Kälteraums in dem thermischen Isolator angeordnet sein, da die zur Kühlung der in dem Kälteraum angeordneten Wicklungen erforderliche kryogene Temperatur der Kryoflüssigkeit die Leistungselektronik beschädigen könnte.

Erfindungsgemäß ist vorgesehen, dass innerhalb des thermischen Isolationsbereichs ein Vakuum erzeugbar ist. Durch ein Vakuum wird eine besonders gute thermische Isolierung der Wicklungen und der Leistungsendstufen erreicht. Vorteilhafterweise werden die Maschinenspulen und die Leistungsendstufen zwischen koaxial zueinander angeordneten Vakuumröhren angeordnet, die durch Deckel verschlossen werden und zwischen denen ein Vakuum bzw. ein technisches Vakuum erzeugt werden kann. Im Zentrum der Vakuumröhre mit kleinerem Durchmesser ist vorteilhafterweise der Rotor angeordnet. Die Vakuumröhren und die Deckel bilden eine Vakuumkammer. Vorteilhafterweise ist erfindungsgemäß vorgesehen, dass eine Versorgungsleitungslänge einer supraleitenden elektrischen Verbindung der Wicklung mit der jeweiligen Leistungsendstufe maximal 10cm beträgt. Durch die auf diese Weise vergleichsweise kurze Ausgestaltung der supraleitenden elektrischen Verbindung kann diese einfacher und kostengünstiger hergestellt werden.

Vorteilhafterweise ist erfindungsgemäß vorgesehen, dass die Leistungsendstufe mit einem beabstandet zu der Leistungsendstufe angeordneten Gleichspannungszwischenkreis elektrisch leitend verbunden ist und mit elektrischer Energie versorgt wird bzw. dass die mehreren Leistungsendstufen mit einem beabstandet zu den Leistungsendstufen angeordneten Gleichspannungszwischenkreis elektrisch leitend verbunden sind und mit elektrischer Energie versorgt werden. Die modular aufgebauten Leistungsendstufen werden vorteilhafterweise über einen gemeinsamen Gleichspannungszwischenkreis mit elektrischer Energie versorgt. Die Versorgungsleitungslängen der supraleitenden elektrischen Verbindungen sowie der normalleitenden elektrischen Leitungen zwischen den Leistungsendstufen und den supraleitenden elektrischen Verbindungen können jeweils vergleichsweise kurz ausgestaltet werden. Betriebsbedingt ist eine Leistungszuführung von dem Gleichspannungszwischenkreis zu den Leistungsendstufen unter Verwendung geringerer Leitungsquerschnitte ausführbar als die Verbindung zwischen den Leistungsendstufen und den einzelnen Wicklungen, da über die elektrischen Leitungen von dem Gleichspannungszwischenkreis zu den Leistungsendstufen lediglich die tatsächlich verbrauchte Leistung geführt werden muss, während über die elektrischen Leitungen zwischen den Leistungsendstufen und den Wicklungen zusätzlich auch die Scheinleistung übertragen werden muss. Durch den modularen Aufbau und die räumlich getrennte Anordnung der Leistungsendstufen und des Gleichspannungszwischenkreis können daher insbesondere die supraleitenden elektrischen Verbindungen einfacher und kostengünstiger hergestellt werden.

Vorteilhafterweise ist erfindungsgemäß vorgesehen, dass der Gleichspannungszwischenkreis außerhalb des thermischen Isolationsbereichs angeordnet ist. Der thermische Isolator bzw. der thermische Isolationsbereich wird durch ein Vakuum gebildet. Die den Leistungsendstufen und den Wicklungen zugeführte elektrische Leistung muss aus der Umgebung durch das gebildete Vakuum hindurchgeführt werden. Neben einem thermischen Eintrag durch Erwärmung der elektrischen Leiter innerhalb des thermischen Isolators, der wiederum rückgekühlt werden muss, ist bei Verwendung eines Vakuums die Abdichtung zwischen den Zuführleitungen zu den Leistungsendstufen und einer beispielsweise durch Vakuumröhren gebildeten Vakuumkammer aufwändig. Sofern die Leistungsendstufen über einen außerhalb des thermischen Isolationsbereichs angeordneten gemeinsamen Gleichspannungszwischenkreis versorgt werden, sind jedoch lediglich zwei Anschlüsse erforderlich, die durch die Vakuumkammer und den thermischen Isolator geführt werden müssen. Dadurch wird der Aufwand zur Abdichtung des Vakuumbereichs deutlich reduziert, da beispielsweise für eine 3-phasige Anbindung zumindest drei Zuführleitungen erforderlich wären. Auf diese Weise wird sowohl der thermische Eintrag in das Kühlsystem verringert als auch der mechanische Aufwand für die Vakuumdurchführungen vereinfacht.

Um die Anzahl der erforderlichen Leitungsdurchführungen durch die Vakuumkammer und den thermischen Isolator weiter zu verringern, ist erfindungsgemäß vorgesehen, dass die Leistungsendstufe bzw. die Leistungsendstufen und die Steuerungseinrichtung bzw. die Steuerungseinrichtungen innerhalb des thermischen Isolationsbereichs angeordnet sind, sodass lediglich zwei elektrische Zuführleitungen von dem Gleichspannungszwischenkreis durch die thermische Isolierung geführt werden müssen.

Bei einer besonders vorteilhaften Ausgestaltung der Erfindung ist vorgesehen, dass die elektrischen Zuführleitungen durch Kühlmittelrohre der Kühleinrichtung geführt werden, über die die Kühleinrichtung mit kryogener Kühlflüssigkeit versorgt wird. Auf diese Weise ist keine zusätzliche Durchführung durch den thermischen Isolator und beispielsweise die ein Vakuum umgebende Vakuumkammer erforderlich. Vorteilhafterweise sind die Zuführleitungen durch ein Kühlmittelrückleitungsrohr geführt, um das Kühlmittel vor der Kühlung der Wicklungen nicht unnötig zu erwärmen und um die erforderliche Kühlleistung zur Kühlung der Wicklungen bis unterhalb der Sprungtemperatur zuverlässig bereitstellen zu können.

Vorteilhafterweise ist erfindungsgemäß vorgesehen, dass die Leistungsendstufen so ausgestaltet sind, dass die Leistungsendstufen jeweils eine Ausgansspannung mit einer Frequenz von mindestens 4 kHz bereitstellen können. Hohe Taktfrequenzen der Leistungsendstufen ermöglichen eine bessere Glättung oder Formgebung der zur Ansteuerung der Wicklungen verwendeten Strom- und Spannungskurven, wodurch Verluste in den supraleitenden Wicklungen reduziert werden können. Durch den modularen Aufbau können elektrische Maschinen mit Ausgangsleistungen von mehreren Megawatt Leistung bereitgestellt werden, wobei jedoch die einzelnen Leistungsendstufen einen vergleichsweise geringen Ausgangsstrom von vorzugsweise maximal 1kA aufweisen müssen. Durch die niedrige erforderliche Ausgangsleistung der einzelnen Leistungsendstufen können besonders hohe Taktfrequenzen erreicht werden.

Um die Leistungsendstufen auf eine vorgegebene Betriebstemperatur abkühlen zu können, ist erfindungsgemäß vorgesehen, dass die Leistungsendstufe bzw. die Leistungsendstufen mit der Kühleinrichtung verbunden sind und auf eine vorgegebene Betriebstemperatur zwischen einer Umgebungstemperatur der elektrischen Maschine und der Sprungtemperatur gekühlt werden können. Auf diese Weise kann erreicht werden, dass die Leistungsendstufen auf eine Betriebstemperatur zwischen der Sprungtemperatur der Supraleiter und der Umgebungstemperatur gekühlt werden, sodass ein Wärmeeintrag von den Leistungsendstufen zu Maschinenspulen minimiert wird, die Leistungsendstufen in optimalen Arbeitsbereichen betrieben werden und die thermische Verluste der Leistungsendstufen ohne zusätzliche Kühleinrichtungen abgeführt werden können.

Vorteilhafterweise ist erfindungsgemäß vorgesehen, dass die Leistungsendstufe bzw. die Leistungsendstufen jeweils über Kühlmittelverbindungsleitungen mit Kühlrohren der Wicklungen verbunden sind, wobei von der Kühleinrichtung Kühlmittel zu den Kühlrohren der Wicklungen geführt wird und das Kühlmittel anschließend über die Kühlmittelverbindungsleitungen zu der Leistungsendstufe bzw. zu den Leistungsendstufen geführt wird. Auf diese Weise können thermische Verluste der Leistungsendstufen einfach durch das weiter verwendete Kühlmittel abgeführt werden.

Weitere vorteilhafte Ausgestaltungen der erfindungsgemäßen elektrischen Maschinen werden anhand von in der Zeichnung dargestellten Ausführungsbeispielen näher erläutert.

Es zeigt:
Figur 1 eine ausschnittsweise schematisch dargestellte Ansicht eines Stators 1 einer elektrischen Maschine,
Figur 2 eine ausschnittsweise schematisch dargestellte Anordnung mehrerer innerhalb eines thermischen Isolators angeordneter Maschinenspulen und Leistungsendstufen und
Figur 3 eine ausschnittsweise schematisch dargestellte Anordnung mehrerer innerhalb eines von einem thermischen Isolator umgebenden Kühlraums angeordneter Maschinenspulen.

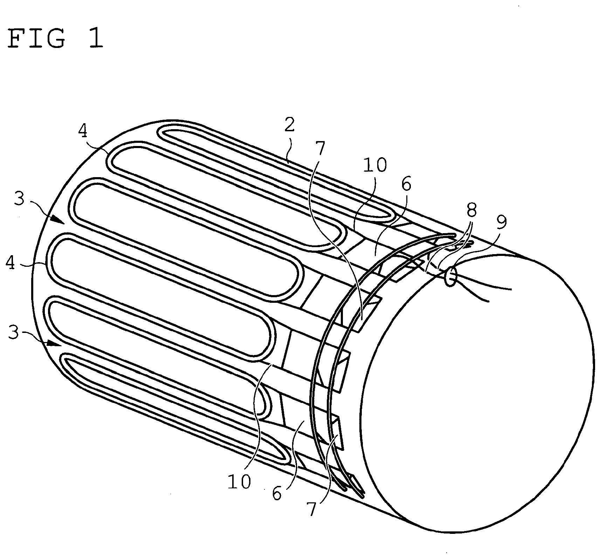

Figur 1 zeigt eine ausschnittsweise schematisch dargestellte Ansicht eines Stators 1 einer elektrischen Maschine. Der Stator 1 weist mehrere konzentrisch um eine Vakuumröhre 2 angeordnete Maschinenspulen 3 auf, die wiederum Wicklungen 4 aus einem supraleitenden Material aufweisen. In einem thermischen Isolationsbereich 5 zwischen der Vakuumröhre 2 und einer weiteren, nicht dargestellten koaxial angeordneten und einen größeren Durchmesser aufweisenden Vakuumröhre sowie zwei ebenfalls nicht dargestellten Verschlüssen zur Abdichtung des thermischen Isolationsbereich 5 zwischen den Vakuumröhren wird ein Vakuum erzeugt. Das Vakuum dient als thermischer Isolator.

Die Wicklungen 4 werden jeweils über eine separate und ebenfalls in dem thermischen Isolator angeordnete Leistungsendstufe 6 mit elektrischer Energie versorgt. In die Leistungsendstufen 6 sind jeweils

Steuerungseinrichtungen 7 integriert.

Die Leistungsendstufen 6 sind über lediglich zwei elektrische Zuführleitungen 8 mit einem nicht dargestellten Gleichspannungszwischenkreis verbunden. Die Zuführleitungen 8 werden über eine schematisch dargestellte dichtende Vakuum-Durchführung 9 durch die Wandung eines der Verschlüsse geführt.

Durch die besonders nahe Anordnung der Leistungsendstufen zu den supraleitenden Wicklungen 4 können

Versorgungsleitungslängen supraleitender elektrischer Verbindungen 10 der Wicklungen mit den jeweiligen Leistungsendstufen 6 besonders kurz ausgeführt werden.

In der Darstellung sind jeweils einzelne mehrerer gleichartiger Elemente exemplarisch mit einem Bezugszeichen gekennzeichnet.

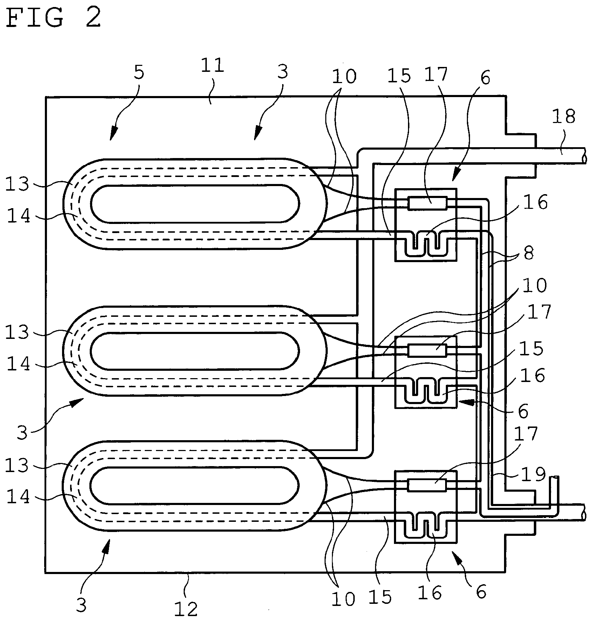

In Figur 2 sind schematisch mehrere innerhalb eines einen thermischen Isolationsbereich 5 bildenden thermischen Isolators 11 angeordnete Maschinenspulen 3 und ebenfalls innerhalb des thermischen Isolators 11 angeordnete Leistungsendstufen 6 dargestellt. Bei dem thermischen Isolator 11 handelt es sich um ein innerhalb einer Vakuumkammer 12 erzeugtes technisches Vakuum.

Wicklungen 13 der Maschinenspulen 3 sind torusförmig ausgestaltet und werden durch von Kryoflüssigkeit durchströmten und an den Wicklungen 13 anliegenden Kühlrohren 14 gekühlt. Rückläufe bzw. Kühlmittelverbindungsleitungen 15 der Kühlrohre 14 sind jeweils mit Wärmetauschern 16 der Leistungsendstufen 6 verbunden, über die Leistungselektronikelemente 17 der Leistungsendstufen 6 gekühlt werden, wobei eine Kühltemperatur der Wicklungen 13 tiefer ist als eine Kühltemperatur der Leistungsendstufen 6.

Die Kryoflüssigkeit strömt über eine Kühlmittelzuführleitung 18 in die Kühlrohre 13. Von den Kühlrohren 13 strömt die Kryoflüssigkeit über die Rückläufe 15 in die Wärmetauscher 16 und von den Wärmetauschern 16 über eine Kühlmittelrückführleitung 19 zurück. Die Kühlmittelzuführleitung 18 und die Kühlmittelrückführleitung 19 sind vakuumdicht durch die Vakuumkammer 12 geführt.

Die Leistungsendstufen 6 sind über elektrische Zuführleitungen 8 mit einem nicht dargestellten Gleichspannungszwischenkreis verbunden. Die elektrischen Zuführleitungen 8 werden durch die Kühlmittelrückführleitung 18 aus der Vakuumkammer 12 herausgeführt, sodass keine zusätzliche vakuumdichte Durchführung für die elektrischen Zuführleitungen 8 vorgesehen werden muss.

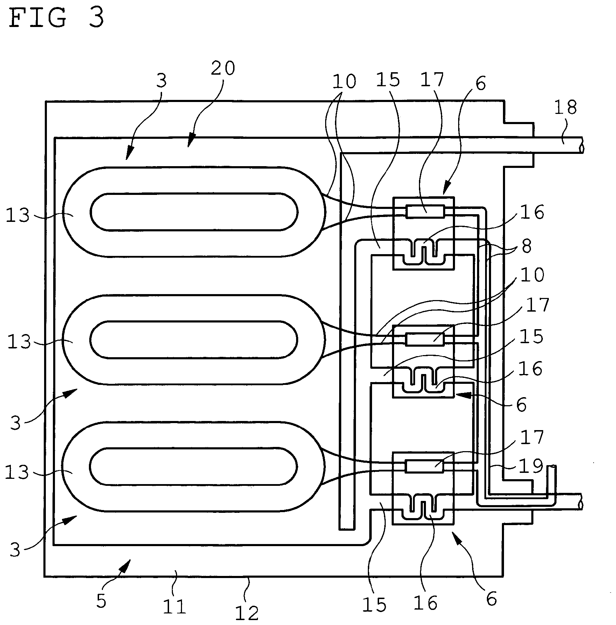

Figur 3 zeigt schematisch eine mehrere innerhalb eines von einem thermischen Isolator 11 umgebenden Kühlraums 20 angeordnete Maschinenspulen 3. Im Unterschied zu der in Figur 2 dargestellten Anordnung werden die Maschinenspulen 3 bzw. Wicklungen 13 bei diesem Ausführungsbeispiel in dem Kühlraum 20 unmittelbar von Kryoflüssigkeit umströmt und gekühlt. Die Wicklungen 13 sind zu diesem Zweck nicht innerhalb des thermischen Isolators 11 bzw. dem thermischen Isolationsbereich 5 angeordnet, sondern in einem von dem thermischen Isolator 11 bzw. dem thermischen Isolationsbereich 5 umgebenden Kühlraum 20. Der übrige Aufbau entspricht dem in Figur 2 dargestellten und beschriebenen Aufbau.

## Patentansprüche

1. Elektrische Maschine mit einem Stator (1), mit einem Rotor und mit mehreren Maschinenspulen (3), wobei die elektrische Maschine eine Kühleinrichtung aufweist, die dazu geeignet ist, ein supraleitendes Material mindestens bis unter eine Sprungtemperatur abzukühlen, wobei eine Wicklung (4, 13) mindestens einer Maschinenspule (3) aus dem supraleitenden Material besteht, wobei die Wicklung (4, 13) mit der Kühleinrichtung in Wirkverbindung steht, um die Wicklung (4, 13) bis unter die Sprungtemperatur abzukühlen, wobei die Wicklungen (4, 13) von einem thermischen Isolator (11) umgeben sind und wobei die elektrische Maschine eine elektrisch leitend mit der Wicklung (4, 13) verbundene steuerbare oder regelbare Versorgungseinrichtung zur elektrischen Versorgung und Ansteuerung der Maschinenspule (3) aufweist, wobei eine steuerbare oder regelbare Leistungsendstufe (6) der Versorgungseinrichtung innerhalb des thermischen Isolators (11) angeordnet ist und elektrisch leitend mit der Wicklung (4, 13) der mindestens einen Maschinenspule (3) verbunden ist, wobei der thermische Isolator (11) ein Vakuum ist und die Leistungsendstufe (6) innerhalb des Vakuums angeordnet ist.

2. Elektrische Maschine nach Anspruch 1, **dadurch gekennzeichnet, dass** die Wicklungen mindestens zweier Maschinenspulen (3) aus dem supraleitenden Material bestehen und verschiedenen Wicklungsgruppen zugeordnet sind, wobei mindestens zwei Wicklungsgruppen jeweils mit einer separaten, steuerbaren oder regelbaren Leistungsendstufe (6) der Versorgungseinrichtung elektrisch leitend verbunden sind.

3. Elektrische Maschine gemäß Anspruch 1 oder Anspruch 2, **dadurch gekennzeichnet, dass** eine oder mehrere Steuerungseinrichtungen (7) zur Steuerung oder Regelung der Leistungsendstufe (6) bzw. der Leistungsendstufen (6) innerhalb des thermischen Isolators (11) angeordnet sind.

4. Elektrische Maschine gemäß einem der voranstehenden Ansprüche, **dadurch gekennzeichnet, dass** die mindestens eine Maschinenspule (3) oder zumindest die Wicklung (4, 13) der mindestens einen Maschinenspule (3) innerhalb des thermischen Isolators (11) angeordnet ist.

5. Elektrische Maschine gemäß Anspruch 4, **dadurch gekennzeichnet, dass** die mindestens eine Maschinenspule (3) oder zumindest die Wicklung (4, 13) der mindestens einen Maschinenspule (3) über mindestens ein an der Wicklung (4, 13) anliegendes kältemittelführendes Kühlrohr (14) gekühlt ist.

6. Elektrische Maschine gemäß einem der voranstehenden Ansprüche, **dadurch gekennzeichnet, dass** die mindestens eine Maschinenspule (3) oder zumindest die Wicklung (4, 13) der mindestens einen Maschinenspule (3) innerhalb eines Kälteraums (20) angeordnet ist, wobei der thermische Isolator (11) den Kälteraum (20) umgibt.

7. Elektrische Maschine gemäß Anspruch 6, **dadurch gekennzeichnet, dass** die mindestens eine Maschinenspule (3) oder zumindest die Wicklung (4, 13) der mindestens einen Maschinenspule (3) durch mindestens einen Badkryostaten oder durch mindestens einen Refrigeratorkryostaten gekühlt sind, wobei die mindestens eine Maschinenspule (3) oder zumindest die Wicklung (4, 13) der mindestens einen Maschinenspule (3) innerhalb des Kälteraums (20) des Badkryostaten oder des Refrigeratorkryostaten angeordnet ist.

8. Elektrische Maschine gemäß einem der voranstehenden Ansprüche, **dadurch gekennzeichnet, dass** eine Versorgungsleitungslänge einer supraleitenden elektrischen Verbindung (10) der Wicklung mit der jeweiligen Leistungsendstufe (6) maximal 10cm beträgt.

9. Elektrische Maschine gemäß einem der voranstehenden Ansprüche, **dadurch gekennzeichnet, dass** die Leistungsendstufe (6) mit einem beabstandet zu der Leistungsendstufe (6) angeordneten Gleichspannungszwischenkreis elektrisch leitend verbunden ist und mit elektrischer Energie versorgt wird bzw. dass die mehreren Leistungsendstufen (6) mit einem beabstandet zu den Leistungsendstufen (6) angeordneten Gleichspannungszwischenkreis elektrisch leitend verbunden sind und mit elektrischer Energie versorgt werden.

10. Elektrische Maschine gemäß Anspruch 9, **dadurch gekennzeichnet, dass** der Gleichspannungszwischenkreis außerhalb des thermischen Isolators (11) angeordnet ist.

11. Elektrische Maschine gemäß Anspruch 10, **dadurch gekennzeichnet, dass** die Leistungsendstufe (6) bzw. die Leistungsendstufen (6) und die Steuerungseinrichtung (7) bzw. die Steuerungseinrichtungen (7) innerhalb des thermischen Isolationsbereichs (5) angeordnet sind, sodass lediglich zwei elektrische Zuführleitungen (8) von dem Gleichspannungszwischenkreis durch den thermischen Isolator (11) geführt werden müssen.

12. Elektrische Maschine gemäß einem voranstehenden Ansprüche, **dadurch gekennzeichnet, dass** die Leistungsendstufen (6) so ausgestaltet sind, dass die Leistungsendstufen (6) jeweils eine Ausgansspannung mit einer Frequenz von mindestens 4 kHz bereitstellen können.

13. Elektrische Maschine gemäß einem voranstehenden Ansprüche, **dadurch gekennzeichnet, dass** die Leistungsendstufe (6) bzw. die Leistungsendstufen (6) mit der Kühleinrichtung verbunden sind und auf eine vorgegebene Betriebstemperatur zwischen einer Umgebungstemperatur der elektrischen Maschine und der Sprungtemperatur gekühlt werden können.

14. Elektrische Maschine gemäß Anspruch 13, **dadurch gekennzeichnet, dass** die Leistungsendstufe (6) bzw. die Leistungsendstufen (6) jeweils über Kühlmittelverbindungsleitungen (15) mit Kühlrohren (14) der Wicklungen (4, 13) verbunden sind, wobei von der Kühleinrichtung Kühlmittel zu den Kühlrohren (14) der Wicklungen (4, 13) geführt wird und das Kühlmittel anschließend über die Kühlmittelverbindungsleitungen (15) zu der Leistungsendstufe (6) bzw. zu den Leistungsendstufen (6) geführt wird.

15. Elektrische Maschine gemäß einem der voranstehenden Ansprüche, **dadurch gekennzeichnet, dass** Maschinenspulen (3) und die Leistungsendstufen (6) einen Teil des Stators (1) bilden.

## Claims

1. Electrical machine with a stator (1), with a rotor and with multiple machine coils (3), wherein the electrical machine comprises a cooling device, which is suitable for cooling a superconductive material at least to below a transition temperature, wherein a winding (4, 13) at least of one machine coil (3) consists of the superconductive material, wherein the winding (4, 13) is operatively connected to the cooling device in order to cool the winding (4, 13) to below the transition temperature, wherein the windings (4, 13) are enclosed by a thermal insulator (11) and wherein the electrical machine comprises an open-loop- or closed-loop-controllable power supply device connected electrically conductively to the winding (4, 13) for the electrical supply and activation of the machine coil (3), wherein an open-loop- or closed-loop-controllable power output stage (6) of the power supply device is arranged inside the thermal insulator (11) and is connected electrically conductively to the winding (4, 13) of the at least one machine coil (3), wherein the thermal insulator (11) is a vacuum and the power output stage (6) is arranged inside the vacuum.

2. Electrical machine according to claim 1, **characterised in that** the windings of at least two machine coils (3) consist of the superconductive material and are associated with different winding groups, wherein at least two winding groups are each connected electrically conductively to a separate open-loop- or closed-loop-controllable power output stage (6) of the power supply device.

3. Electrical machine according to claim 1 or claim 2, **characterised in that** one or more control device(s) (7) for open- or closed-loop control of the power output stage (6) or of the power output stages (6) are arranged inside the thermal insulator (11).

4. Electrical machine according to any one of the preceding claims, **characterised in that** the at least one machine coil (3) or at least the winding (4, 13) of the at least one machine coil (3) is arranged inside the thermal insulator (11) .

5. Electrical machine according to claim 4, **characterised in that** the at least one machine coil (3) or at least the winding (4, 13) of the at least one machine coil (3) is cooled via at least one refrigerant-carrying cooling tube (14) abutting on the winding (4, 13).

6. Electrical machine according to any one of the preceding claims, **characterised in that** the at least one machine coil (3) or at least the winding (4, 13) of the at least one machine coil (3) is arranged inside a cold chamber (20), wherein the thermal insulator (11) encloses the cold chamber (20) .

7. Electrical machine according to claim 6, **characterised in that** the at least one machine coil (3) or at least the winding (4, 13) of the at least one machine coil (3) are cooled by at least one bath cryostat or by at least one refrigerator cryostat, wherein the at least one machine coil (3) or at least the winding (4, 13) of the at least one machine coil (3) is arranged inside the cold chamber (20) of the bath cryostat or of the refrigerator cryostat.

8. Electrical machine according to any one of the preceding claims, **characterised in that** a power supply line length of a superconductive electrical connection (10) of the winding to the respective power output stage (6) is maximally 10 cm.

9. Electrical machine according to any one of the preceding claims, **characterised in that** the power output stage (6) is connected electrically conductively to a direct current link arranged at a distance from the power output stage (6) and is supplied with electrical energy or that the multiple power output stages (6) are connected electrically conductively to a direct current link arranged at a distance from the power output stages (6) and are supplied with electrical energy.

10. Electrical machine according to claim 9, **characterised in that** the direct current link is arranged outside the thermal insulator (11).

11. Electrical machine according to claim 10, **characterised in that** the power output stage (6) or the power output stages (6) and the control device (7) or the control devices (7) are arranged inside the thermal insulation region (5), so that only two electrical supply lines (8) have to be led from the direct current link through the thermal insulator (11).

12. Electrical machine according to any one of the preceding claims, **characterised in that** the power output stages (6) are configured such that the power output stages (6) can each provide an output voltage with a frequency of at least 4 kHz.

13. Electrical machine according to any one of the preceding claims, **characterised in that** the power output stage (6) or the power output stages (6) are connected to the cooling device and can be cooled to a predetermined operating temperature between an ambient temperature of the electrical machine and the transition temperature.

14. Electrical machine according to claim 13, **characterised in that** the power output stage (6) or the power output stages (6) are each connected via coolant connection lines (15) to cooling tubes (14) of the windings (4, 13), wherein coolant is carried from the cooling device to the cooling tubes (14) of the windings (4, 13) and the coolant is then carried via the coolant connection lines (15) to the power output stage (6) or to the power output stages (6).

15. Electrical machine according to any one of the preceding claims, **characterised in that** machine coils (3) and the power output stages (6) form part of the stator (1).

## Revendications

1. Machine électrique comprenant un stator (1), un rotor et plusieurs bobines de machine (3), la machine électrique comportant un dispositif de refroidissement, qui est adapté pour refroidir un matériau supraconducteur au moins jusqu'à une température inférieure à une température de transition, un enroulement (4, 13) d'au moins une bobine de machine (3) consistant en du matériau supraconducteur, l'enroulement (4, 13) étant en liaison fonctionnelle avec le dispositif de refroidissement, pour refroidir l'enroulement (4, 13) jusqu'à une température inférieure à la température de transition, les enroulements (4, 13) étant entourés par un isolant thermique (11) et la machine électrique comportant un dispositif d'alimentation apte à être commandé et/ou régulé, relié de manière électriquement conductrice à l'enroulement (4, 13) et destiné à l'alimentation électrique et à la commande de la bobine de machine (3), un étage de sortie de puissance (6), apte à être commandé ou régulé, du dispositif d'alimentation étant disposé dans l'isolant thermique (11) et relié de manière électriquement conductrice à l'enroulement (4, 13) de l'au moins une bobine de machine (3), l'isolant thermique (11) étant un vide et l'étage de sortie de puissance (6) étant disposé dans le vide.

2. Machine électrique selon la revendication 1, **caractérisée en ce que** les enroulements d'au moins deux bobines de machine (30) consistent en du matériau supraconducteur et sont associés à différents groupes d'enroulement, au moins deux groupes d'enroulement étant chacun reliés de manière électriquement conductrice à un étage de sortie de puissance (6) séparé, apte à être commandé ou régulé, du dispositif d'alimentation.

3. Machine électrique selon la revendication 1 ou la revendication 2, **caractérisée en ce qu'**un ou plusieurs dispositifs de commande (7) pour la commande ou la régulation de l'étage de sortie de puissance (6) ou des étages de sortie de puissance (6) sont disposés au sein de l'isolant thermique (11) .

4. Machine électrique selon l'une des revendications précédentes, **caractérisée en ce que** l'au moins une bobine de machine (3) ou au moins l'enroulement (4, 13) de l'au moins une bobine de machine (3) est disposé(e) dans l'isolant thermique (11).

5. Machine électrique selon la revendication 4, **caractérisée en ce que** l'au moins une bobine de machine (3) ou au moins l'enroulement (4, 13) de l'au moins une bobine de machine (3) est refroidi(e) par le biais d'au moins un tube de refroidissement (14) conduisant un fluide frigorigène et contigu à l'enroulement (4, 13).

6. Machine électrique selon l'une des revendications précédentes, **caractérisée en ce que** l'au moins une bobine de machine (3) ou au moins l'enroulement (4, 13) de l'au moins une bobine de machine (3) est disposé(e) dans une chambre froide (20), l'isolant thermique (11) entourant la chambre froide (20).

7. Machine électrique selon la revendication 6, **caractérisée en ce que** l'au moins une bobine de machine (3) ou au moins l'enroulement (4, 13) de l'au moins une bobine de machine (3) sont refroidis par au moins un bain cryostatique ou par au moins un cryoréfrigérateur, l'au moins une bobine de machine (3) ou au moins l'enroulement (4, 13) de l'au moins une bobine de machine (3) étant disposé(e) dans la chambre froide (20) du bain cryostatique ou du cryoréfrigérateur.

8. Machine électrique selon l'une des revendications précédentes, **caractérisée en ce qu'**une longueur de ligne d'alimentation d'une liaison électrique supraconductrice (10) de l'enroulement à l'étage de sortie de puissance (6) respectif est de maximum 10 cm.

9. Machine électrique selon l'une des revendications précédentes, **caractérisée en ce que** l'étage de sortie de puissance (6) est relié de manière électriquement conductrice à un circuit intermédiaire de tension continue disposé espacé de l'étage de sortie de puissance (6) et est alimenté en énergie électrique ou **en ce que** les plusieurs étages de sortie de puissance(6) sont reliés de manière électriquement conductrice à un circuit intermédiaire de tension continue disposé espacé des étages de sortie de puissance(6) et sont alimentés en énergie électrique.

10. Machine électrique selon la revendication 9, **caractérisée en ce que** le circuit intermédiaire de tension continue est disposé en dehors de l'isolant thermique (11).

11. Machine électrique selon la revendication 10, **caractérisée en ce que** l'étage de sortie de puissance (6) ou les étages de sortie de puissance(6) et le dispositif de commande (7) ou les dispositifs de commande (7) sont disposés dans la zone d'isolation thermique (5), de telle sorte que seulement deux lignes d'alimentation électrique (8) du circuit intermédiaire de tension continue doivent être guidées à travers l'isolant thermique (11).

12. Machine électrique selon l'une des revendications précédentes, **caractérisée en ce que** les étages de sortie de puissance(6) sont conçus de telle manière que les étages de sortie de puissance(6) peuvent chacun fournir une tension de sortie ayant une fréquence d'au moins 4 kHz.

13. Machine électrique selon l'une des revendications précédentes, **caractérisée en ce que** l'étage de sortie de puissance (6) ou les étages de sortie de puissance(6) sont reliés au dispositif de refroidissement et peuvent être refroidis à une température de fonctionnement prédéfinie située entre une température ambiante de la machine électrique et la température de transition.

14. Machine électrique selon la revendication 13, **caractérisée en ce que** l'étage de sortie de puissance (6) ou les étages de sortie de puissance(6) sont chacun reliés à des tubes de refroidissement (14) des enroulements (4, 13) par le biais de lignes de liaison pour réfrigérant (15), du réfrigérant étant guidé par le dispositif de refroidissement vers les tubes de refroidissement (14) des enroulements (4, 13) et le réfrigérant étant ensuite guidé vers l'étage de sortie de puissance (6) ou les étages de sortie de puissance(6) par le biais des lignes de liaison pour réfrigérant (15).

15. Machine électrique selon l'une quelconque des revendications précédentes, **caractérisée en ce que** des bobines de machine (3) et les étages de sortie de puissance (6) forment une partie du stator (1).
